# EUROPEAN PATENT APPLICATION

(11) **EP 4 811 121 A1**
(43) Date of publication of application: **23.09.2026**
(21) Application number: 24910124.7
(22) Date of filing: 09.10.2024
(51) Int. Cl.: G06F 8/656

(54) **DATA ACCESS SWITCHING METHOD AND APPARATUS**

(30) Priority: 29.12.2023 CN 202311866601
(71) Applicant: Huawei Technologies Co., Ltd., Shenzhen, Guangdong 518129 (CN)
(72) Inventor: KUANG, Zhuqing, Shenzhen, Guangdong 518129 (CN); YANG, Juntao, Shenzhen, Guangdong 518129 (CN)
(74) Representative: Huawei European IPR
(86) International application number: PCT/CN2024/123667
(87) International publication number: WO 2025/139182

(57) **Abstract**

A data access switching method and apparatus are disclosed, and relate to the field of storage technologies. In a data access process, different paths are established between a host and different controllers in a storage system, and the host stores update wait delay time of a controller on a currently accessed path. When the current controller in the storage system that transmits a data access request of the host is to be updated, the current controller notifies the host to switch to a path provided by another controller in the storage system, and the another controller executes a data access service of the host. In this way, within the update wait delay time of the current controller, the host can continue to access data without waiting for a relatively long period of time, thereby reducing interruption time of the service on the host.

## Description

This application claims priority to Chinese Patent Application No. 202311866601.6, filed with the China National Intellectual Property Administration on December 29, 2023 and entitled "DATA ACCESS SWITCHING METHOD AND APPARATUS", which is incorporated herein by reference in its entirety.

### TECHNICAL FIELD

This application relates to the field of storage technologies, and in particular, to a data access switching method and apparatus.

### BACKGROUND

With the development of big data (big data), artificial intelligence (artificial intelligence, AI), and cloud computing technologies, a large amount of data is continuously generated. A storage system based on NVMe-oF (non-volatile memory express over Fabrics, NVMe-oF) is used as an example. The storage system includes a plurality of controllers and hard disks. Different controllers provide a plurality of access paths for a host, where the access path indicates a controller with which the host is to communicate and a hard disk to be accessed by the controller. During service execution by the host, if a controller on an access path currently used by the host needs to be updated, the host needs to wait for a relatively long preset period of time, such as an input/output (input/output, I/O) timeout or a keep alive timeout (keep alive timeout, KATO). After the waiting, the host establishes an association with a controller of another access path in the storage system and resumes a data access process corresponding to the service. However, the long waiting time of the host causes a long interruption time of the service on the host.

### SUMMARY

This application provides a data access switching method and apparatus, to resolve a problem that a host waits for a relatively long period of time when an update of a controller in a storage system is performed, and reduce an interruption time of a service on the host.

The following technical solutions are used in this application.

According to a first aspect, this application provides a data access switching method. The data access switching method is applied to a storage system. The storage system includes a plurality of controllers and hard disks. For example, the plurality of controllers include a first storage controller and a second storage controller. The data access switching method includes: The first storage controller sends an identify command to a host, and establishes a first path with the host, where the identify command includes update wait delay time of the first storage controller; and the first storage controller receives a first data access request of the host through the first path, and executes access indicated by the first data access request. The first storage controller sends an update notification command to the host, where the update notification command carries an identifier that indicates the host to send a second data access request to the second storage controller, and the second data access request and the first data access request belong to a same service flow; and the first storage controller executes an update procedure with the foregoing update wait delay time.

In some optional implementations, the identify command may also be referred to as a first request, a first packet, a first command, or the like; and the update notification command may also be referred to as a second request, a second packet, a second command, or the like.

In a controller update scenario in the storage system, the controller actively sends the update notification command to the host. Because the update notification command instructs the host to send the data access request to another controller, even if the controller with which the host currently communicates is in the update scenario, the host may send the data access request to the another controller in the storage system in response to the update notification command, that is, a data access service of the host may be quickly switched from the current controller to the another controller for processing. This greatly alleviates a problem in a conventional technology that a host waits for a controller for a relatively long period of time before switching to another path, and reduces interruption time of the service on the host.

In addition, because the current controller executes the update procedure within the update wait delay time, even if time for the host to execute the data access service through the another controller reaches the update wait delay time, a process of re-establishing the path between the host and the current controller is not affected by the update procedure of the controller, thereby further reducing the interruption time of the service on the host. In addition, when end time of re-establishing the path between the host and the current controller does not reach the foregoing update wait delay time, the data access service of the host is not interrupted in a time period in which the data access service of the host is switched from the another controller back to an updated controller. This helps implement smooth switching of the data access service of the host in the controller update scenario in the storage system, thereby achieving effect that the data access service of the host does not drop to zero.

With reference to the data access switching method provided in the first aspect, in an optional implementation, the switching method provided in this application further includes: After an update of the first storage controller is completed, the first storage controller receives an association establishment request of the host, and establishes a second path with the host based on the association establishment request. The first storage controller receives a third data access request of the host through the second path, and executes access indicated by the third data access request, where the third data access request and the second data access request belong to the same service flow. After an update of the current controller is completed, the controller re-establishes a path with the host. Because the data access service of the host within the update wait delay time has been executed by the another controller, the interruption time of the service on the host is reduced, thereby avoiding a problem that waiting time of the host is long in the controller update scenario.

According to a second aspect, this application provides another data access switching method. The data access switching method is performed by a host. The data access switching method includes: A host receives an identify command of a first storage controller in a storage system and an identify command of a second storage controller in the storage system, establishes a first path with the first storage controller, and establishes a second path with the second storage controller, where the identify command of the first storage controller includes update wait delay time of the first storage controller. The host sends a first data access request to the first storage controller through the first path. In addition, the host sends a first data access request to the first storage controller through the first path, and receives an update notification command sent by the first storage controller, where the update notification command carries an identifier that indicates the host to send a second data access request to the second storage controller, and the second data access request and the first data access request belong to a same service flow. Finally, the host sends the second data access request to the second storage controller through the second path in response to the update notification command.

In a controller update scenario in a storage system, a host switches, based on the update notification command of the current controller, a path of the data access request from the path provided by the current controller to a path provided by another controller, so that a data access service of the host can be quickly switched from the current controller to the another controller for processing, thereby greatly reducing a problem that the host waits for the controller for a relatively long period of time before switching to another path in a conventional technology, and reducing interruption time of the service on the host. In addition, because the current controller executes the update procedure within the update wait delay time, even if time for the host to execute the data access service through the another controller reaches the update wait delay time, a process of re-establishing the path between the host and the current controller is not affected by the update procedure of the controller, thereby further reducing the interruption time of the service on the host.

In addition, when end time of re-establishing the path between the host and the current controller does not reach the foregoing update wait delay time, the data access service of the host is not interrupted in a time period in which the data access service of the host is switched from the another controller back to an updated controller. This helps implement smooth switching of the data access service of the host in the controller update scenario in the storage system, thereby achieving effect that the data access service of the host does not drop to zero.

With reference to the data access switching method provided in the second aspect, in an optional implementation, the switching method provided in this application further includes: After the host sends the second data access request to the second storage controller through the second path, the data access switching method provided in this application further includes: After expiration of the update wait delay time of the first storage controller, the host sends an association establishment request to the first storage controller, and establishes a third path with the first storage controller; and the host sends a third data access request to the first storage controller through the third path, where the third data access request and the second data access request belong to the same service flow. After an update of the current controller is completed, the host re-establishes a path with the controller. Because the data access service of the host within the update wait delay time has been executed by the another controller, the interruption time of the service on the host is reduced, thereby avoiding a problem that waiting time of the host is long in the controller update scenario.

With reference to the data access switching methods provided in the first aspect and the second aspect, in an optional implementation, the foregoing update wait delay time is control update wait delay time, the foregoing update notification command is an asynchronous event information notification command, and the foregoing identifier is a control update starting identifier.

With reference to the data access switching methods provided in the first aspect and the second aspect, in an optional implementation, a tail of the identify command includes a first reserved field, and the first reserved field is used to carry the control update wait delay time.

With reference to the data access switching methods provided in the first aspect and the second aspect, in an optional implementation, bytes 1806-1807 in the identify command are used to carry the control update wait delay time.

With reference to the data access switching methods provided in the first aspect and the second aspect, in an optional implementation, the update notification command (the asynchronous event information notification command) includes a second reserved field, and the second reserved field is used to carry the control update starting identifier.

With reference to the data access switching methods provided in the first aspect and the second aspect, in an optional implementation, a value of the second reserved field is F1h.

According to a third aspect, this application provides a data access switching apparatus. The data access switching apparatus is used in a first storage controller in a storage system, and the switching apparatus includes a module or a unit configured to perform the first aspect or any one of the optional implementations in the first aspect.

For example, the switching apparatus includes a transceiver module, an execution module, and an update module. The transceiver module is configured to: send an identify command to a host, and establish a first path with the host, where the identify command includes update wait delay time. The execution module is configured to: receive a first data access request of the host through the first path, and execute access indicated by the first data access request. The transceiver module is further configured to send an update notification command to the host, where the update notification command carries an identifier that indicates the host to send a second data access request to a second storage controller in the storage system, and the second data access request and the first data access request belong to a same service flow. The update module is configured to execute an update procedure within the update wait delay time.

According to a fourth aspect, this application provides another data access switching apparatus. The data access switching apparatus is used in a host, and the switching apparatus includes a module or a unit configured to perform the second aspect or any one of the optional implementations in the second aspect.

For example, the switching apparatus includes a receiving module and a sending module. The receiving module is configured to: receive an identify command of a first storage controller in a storage system and an identify command of a second storage controller in the storage system, establish a first path with the first storage controller, and establish a second path with the second storage controller, where the identify command of the first storage controller includes update wait delay time of the first storage controller. The sending module is configured to send a first data access request to the first storage controller through the first path. The receiving module is further configured to receive an update notification command sent by the first storage controller, where the update notification command carries an identifier that indicates the host to send a second data access request to the second storage controller, and the second data access request and the first data access request belong to a same service flow. The sending module is further configured to send the second data access request to the second storage controller through the second path in response to the update notification command.

According to a fifth aspect, this application provides a controller. The controller includes a control circuit and an interface circuit. The interface circuit is configured to: send an identify command, and implement a function of the controller (for example, the first storage controller or the second storage controller) in any one of optional implementations in the first aspect or the second aspect in collaboration with the control circuit.

According to a sixth aspect, this application provides a storage system. The storage system includes a hard disk and a plurality of controllers provided in the fifth aspect. The hard disk is configured to store data. The controller is configured to receive a data access request for the foregoing data, and implement the method in the first aspect or any one of the optional implementations in the first aspect in collaboration with the hard disk.

According to a seventh aspect, this application provides a host. The host includes a processor and a transceiver. The transceiver is configured to: receive an identify command, and implement the method in the second aspect or any one of the optional implementations in the second aspect in collaboration with the processor.

According to an eighth aspect, this application provides a data access system. The data access system includes the storage system provided in the sixth aspect and the host provided in the seventh aspect. The host and the storage system communicate with each other in a wired or wireless connection manner, and collaboratively implement the method in any one of the optional implementations in the first aspect or the second aspect.

According to a ninth aspect, this application provides a readable storage medium. The readable storage medium includes a computer program or instructions. When the computer program or the instructions are executed by an electronic device, the electronic device performs the method in the first aspect or any one of the optional implementations in the first aspect, or the method in the second aspect or any one of the optional implementations in the second aspect. The electronic device may be the foregoing controller, storage system, host, or the like.

According to a tenth aspect, this application provides a computer program product. The computer program product includes a computer program or instructions. When the computer program or the instructions are executed by an electronic device, the electronic device performs the method in the first aspect or any one of the optional implementations in the first aspect, or the method in the second aspect or any one of the optional implementations in the second aspect. The electronic device may be the foregoing controller, storage system, host, or the like.

For beneficial effects of the technical solutions provided in the third aspect to the tenth aspect, refer to the descriptions of any one of the optional implementations in the first aspect or the second aspect. Details are not described herein again. Based on the implementations provided in the foregoing aspects, this application may be further combined to provide more implementations.

### BRIEF DESCRIPTION OF DRAWINGS

FIG. 1 is a diagram of a structure of a data access system according to this application;
FIG. 2 is a schematic flowchart 1 of a data access switching method according to this application;
FIG. 3 is a schematic flowchart 2 of a data access switching method according to this application;
FIG. 4 is a schematic flowchart 3 of a data access switching method according to this application;
FIG. 5 is a diagram 1 of a structure of a data access switching apparatus according to this application;
FIG. 6 is a diagram 2 of a structure of a data access switching apparatus according to this application; and
FIG. 7 is a diagram of a structure of a host according to this application.

### DESCRIPTION OF EMBODIMENTS

This application provides a data access switching method. In a data access process, different paths are established between a host and different controllers in a storage system, and the host stores update wait delay time of a controller on a currently accessed path. When the current controller in the storage system that transmits a data access request of the host is to be updated, the current controller notifies the host to switch to a path provided by another controller in the storage system, and the another controller executes a data access service of the host. In this way, within the update wait delay time of the current controller, the host does not need to wait for a relatively long period of time, thereby reducing interruption time of the service on the host.

Specifically, in a controller update scenario in the storage system, the controller actively sends an asynchronous event information notification command to the host. Because the asynchronous event information notification command instructs the host to send the data access request to another controller, even if the controller with which the host currently communicates is in the update scenario, the host may still send the data access request to the another controller in the storage system in response to the asynchronous event information notification command, that is, the data access service of the host may be quickly switched from the current controller to the another controller for processing. This greatly alleviates a problem in a conventional technology that a host waits for a controller for a relatively long period of time before switching to another path, and reduces interruption time of the service on the host. In addition, because the current controller executes an update procedure within the (control) update wait delay time, even if time for the host to execute the data access service through the another controller reaches the end of the (control) update wait delay time, a process of re-establishing the path between the host and the current controller is not affected by the update procedure of the controller, thereby further reducing the interruption time of the service on the host. In addition, when end time of re-establishing the path between the host and the current controller does not reach the end of the foregoing (control) update wait delay time, the data access service of the host is not interrupted in a time period during which the data access service of the host is switched from the another controller back to an updated controller. This helps implement smooth switching of the data access service of the host in the controller update scenario in the storage system, thereby achieving effect that the data access service of the host does not drop to zero.

Technical solutions in this application may be applied to existing storage technologies or storage standards, and may also be applied to future storage technologies or storage standards. Terms used in implementations of this application are merely used to explain specific embodiments of this application, but are not intended to limit this application. The following first briefly describes some concepts that may be used in this application.

Non-volatile memory (non-volatile memory, NVM): The non-volatile memory has characteristics of non-volatility, byte-level access, a high storage density, low power consumption, and the like, and is a computer storage in which stored data does not disappear after a current is turned off.

Non-volatile memory express (non-volatile memory express, NVMe): The non-volatile memory express is a standard interface protocol formulated for a peripheral component interconnect express (Peripheral Component Interconnect Express, PCIe) protocol, removes various limitations imposed by an old standard on an SSD, can support most operating systems, and has good scalability.

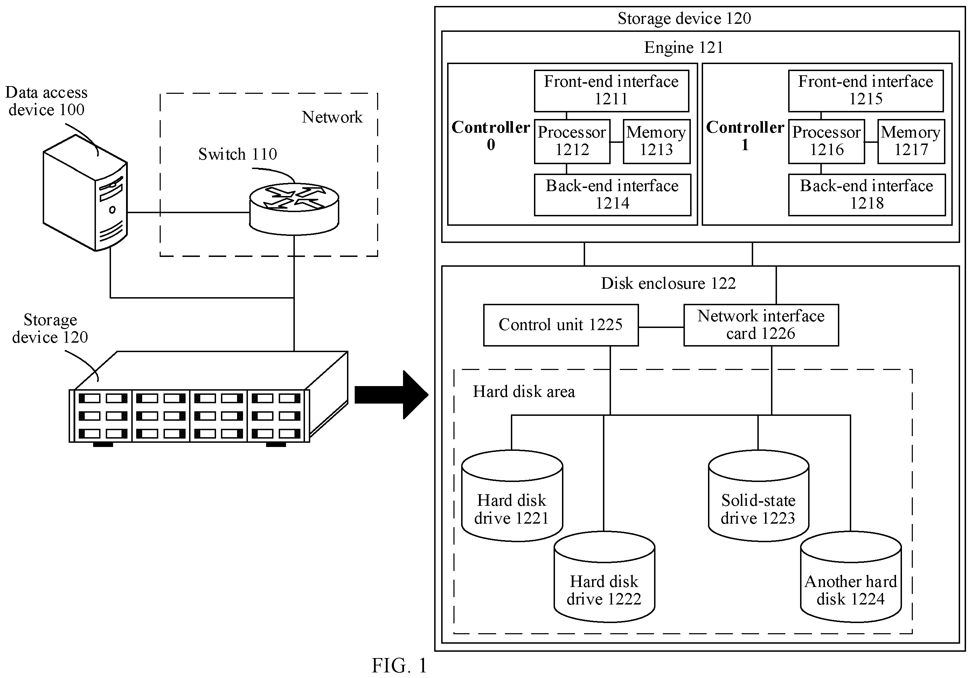

For clear and brief description of the following embodiments, a data access system and a storage system to which this application can be applied are first described. FIG. 1 is a diagram of a structure of a data access system according to this application. The data access system includes a data access device 100 and a storage device 120. In an application scenario shown in FIG. 1, a user accesses data through applications. A computer running these applications may be referred to as a "compute device".

The data access device 100 may be a physical machine or a virtual machine. The physical machine may include but is not limited to one or two of a user end and a smart network interface card (smart NIC).

For example, the data access device 100 includes the user end. The user end may be a client (client), for example, a host (host), a desktop computer, a server, a laptop computer, a mobile device, or the like.

For another example, the data access device 100 includes the smart network interface card (smart NIC). The smart network interface card is also referred to as a smart network adapter. In addition to completing a network transmission function provided by a standard network interface card, the smart network interface card further provides a built-in programmable and configurable hardware acceleration engine, to improve performance of an application, greatly reduce communication consumption of a CPU in a host connected to the smart network interface card, and provide more CPU resources for the application. For example, in a highly virtualized environment, the CPU in the host needs to run a task related to an open virtual switch (open virtual switch, OVS). In addition, the CPU in the host further needs to process operations such as storage, online or offline encryption and decryption of a data packet, deep data packet inspection, firewall, and complex routing. These operations consume a large quantity of CPU resources, and optimal service performance cannot be achieved due to CPU resource contention among different services. As a hub for connecting various services, the smart network interface card accelerates the foregoing services.

For still another example, the data access device 100 includes the user end and the smart network interface card.

In a possible example, the data access device 100 accesses the storage device 120 through a network to access data. For example, the network may include a switch 110.

In another possible example, the data access device 100 may alternatively communicate with the storage device 120 through a wired connection, for example, through a universal serial bus (universal serial bus, USB), a peripheral component interconnect express (Peripheral Component Interconnect Express, PCIe) bus, or another wired connection.

The storage device 120 shown in FIG. 1 may be a centralized storage system. The centralized storage system features a unified portal, and all data from an external device passes through this portal. The portal is an engine 121 of the centralized storage system. The engine 121 is a core component of the centralized storage system, and many advanced functions of the storage system are implemented in the engine.

As shown in FIG. 1, there may be one or more controllers in the engine 121. In FIG. 1, an example in which the engine 121 includes two controllers (for example, a controller 0 and a controller 1 in FIG. 1) is used for description. In a possible example, if the engine 121 includes a plurality of controllers, a mirror channel may exist between any two controllers, to implement a function of mutual backup of the any two controllers. This avoids unavailability of the entire storage device 120 caused by a hardware fault. In some examples, the controller in the storage device may also be referred to as a storage controller. This is not limited in this application. It should be understood that if the engine 121 includes a plurality of controllers, the engine 121 may also be referred to as an array controller of the storage device 120.

The engine 121 further includes a front-end interface 1211 and a back-end interface 1214. The front-end interface 1211 is configured to communicate with the data access device 100, to provide a data access service for the data access device 100. The back-end interface 1214 is configured to communicate with a hard disk, to expand a capacity of the storage device 120. The engine 121 may connect to more hard disks through the back-end interface 1214, to form a large storage resource pool.

In terms of hardware, as shown in FIG. 1, the controller 0 at least includes a processor 1212 and a memory 1213. The processor 1212 is a central processing unit (central processing unit, CPU), configured to process a data access request from the outside (a server or another storage system) of the storage device 120, and further configured to process a request generated inside the storage device 120. For example, when receiving, through the front-end interface 1211, data write requests sent by the data access device 100, the processor 1212 temporarily stores, in the memory 1213, data in the data write requests. When a total amount of data in the memory 1213 reaches a specific threshold, the processor 1212 sends, to at least one of a hard disk drive 1221, a hard disk drive 1222, a solid-state drive (solid-state drive, SSD) 1223, or another hard disk 1224 through the back-end port for persistent storage, the data stored in the memory 1213.

The memory 1213 refers to an internal storage that directly exchanges data with the processor. The memory can read/write the data at a high speed at any time, and serves as a temporary data storage of an operating system or another running program. The memory includes at least two types of storages. For example, the memory may be a random access memory, or may be a read-only memory (read-only memory, ROM). For example, the random access memory is a DRAM or an SCM. The DRAM is a semiconductor memory, and is a volatile memory (volatile memory) device like most random access memories (random access memory, RAM). The DRAM and the SCM are merely examples for description in embodiments. The memory may further include another random access memory, for example, a static random access memory (static random access memory, SRAM). The read-only memory may be, for example, a programmable read-only memory (programmable read-only memory, PROM) or an erasable programmable read-only memory (erasable programmable read-only memory, EPROM).

In addition, the memory 1213 may alternatively be a dual in-line memory module (dual in-line memory module, DIMM) or a dual-line memory module, that is, a module including a dynamic random access memory (DRAM), or may be an SSD. In an actual application, a plurality of memories 1213 and different types of memories 1213 may be configured in the controller 1. A quantity and types of the memories 1213 are not limited in embodiments. In addition, the memory 1213 may be configured to have a power protection function. The power protection function means that data stored in the memory 1213 is not lost even when a system is powered off and then powered on again. A memory having the power protection function is referred to as a non-volatile memory.

The memory 1213 stores a software program, and the processor 1212 can manage the hard disk by running the software program in the memory 1213. For example, the hard disk is abstracted into a storage resource pool, and the storage resource pool is provided for the server for usage in a form of a logical unit number (logical unit number, LUN). The LUN herein is actually the hard disk seen on the server. Certainly, some centralized storage systems are also file servers, and can provide file sharing services for servers.

As shown in FIG. 1, in the system, the engine 121 may not have a disk slot, the hard disk needs to be placed in a disk enclosure 122, and the back-end interface 1214 communicates with the disk enclosure 122. The back-end interface 1214 exists in the engine 121 in a form of an adapter card, and one engine 121 may be connected to a plurality of disk enclosures through two or more back-end interfaces. Alternatively, the adapter card may be integrated in a mainboard. In this case, the adapter card may communicate with the processor 1212 through the PCIe bus. For example, the controller 1 includes a front-end interface 1215, a processor 1216, a memory 1217, and a back-end interface 1218. For hardware implementation of the controller 1, refer to content of the controller 0. Details are not described herein again.

It should be noted that FIG. 1 shows one engine 121. However, in an actual application, the storage system may include two or more engines 121, and redundancy or load balancing is performed among a plurality of engines 121.

The disk enclosure 122 includes a control unit 1225 and several hard disks. The control unit 1225 may have a plurality of forms. In one case, the disk enclosure 122 is a smart disk enclosure. As shown in FIG. 1, the control unit 1225 includes a CPU and a memory. The CPU is configured to perform operations such as address translation and data reading and writing. The memory is configured to temporarily store data that is to be written into the hard disk, or data that is read from the hard disk and that is to be sent to the controller. In another case, the control unit 1225 is a programmable electronic component, for example, a data processing unit (data processing unit, DPU). The DPU has commonality and programmability of the CPU, but is more specialized, and can run efficiently on a network data packet, a storage request, or an analysis request. The DPU is distinguished from the CPU by a high degree of parallelism (which requires processing a large quantity of requests). Optionally, the DPU herein may alternatively be replaced with a processing chip, for example, a graphics processing unit (graphics processing unit, GPU) or an embedded neural-network processing unit (neural-network processing unit, NPU). Generally, there may be one control unit 1225 or two or more control units 1225. A function of the control unit 1225 may be offloaded to a network interface card 1226. In other words, in this implementation, the disk enclosure 122 does not have a control unit 1225 inside, but the network interface card 1226 completes data reading and writing, address translation, and another computing function. In this case, the network interface card 1226 is a smart network interface card. The network interface card may contain a CPU and a memory. The CPU is configured to perform operations such as address translation and data reading and writing. The memory is configured to temporarily store data that is to be written into the hard disk, or data this is read from the hard disk and that is to be sent to the controller. The network interface card may alternatively be a programmable electronic component, for example, a DPU. There is no homing relationship between the network interface card 1226 and the hard disk in the disk enclosure 122. The network interface card 1226 may access any hard disk (for example, the hard disk drive 1221, the hard disk drive 1222, the solid-state drive 1223, or the another hard disk 1224 shown in FIG. 1) in the disk enclosure 122. Therefore, hard disk expansion is convenient when storage space is insufficient.

Based on a type of a communication protocol between the engine 121 and the disk enclosure 122, the disk enclosure 122 may be a serial attached small computer system interface (serial attached small computer system interface, SAS) disk enclosure, may be an NVMe disk enclosure, or may be another type of disk enclosure. The SAS disk enclosure uses an SAS 3.0 protocol, and each enclosure supports 25 SAS hard disks. The engine 121 is connected to the disk enclosure 122 through an onboard SAS interface or an SAS interface module. The NVMe disk enclosure is more like a complete computer system, and an NVMe hard disk is inserted into the NVMe disk enclosure. The NVMe disk enclosure is connected to the engine 121 through an RDMA port (or referred to as an RDMA interface).

For example, the storage device 120 may be a storage array, for example, an all-flash storage array in which all storage media are flash memories.

In an optional implementation, the storage device 120 is a centralized storage system in which a hard disk and a controller are integrated. The storage device 120 does not have the foregoing disk enclosure 122. The engine 121 is configured to manage a plurality of hard disks connected through a disk slot. A function of the disk slot may be implemented by the back-end interface 1214 or the back-end interface 1218.

In another optional implementation, the storage device 120 shown in FIG. 1 is a distributed storage system. The distributed storage system includes a compute device cluster and a storage device cluster. The compute device cluster includes one or more compute devices, and the compute devices may communicate with each other. The compute device may be a compute device, for example, a server, a desktop computer, or a controller of a storage array. In terms of hardware, the compute device may include a processor, a memory, a network interface card, and the like. The processor is a CPU, and is configured to process a data access request from the outside of the compute device or a request generated inside the compute device. For example, when receiving data write requests sent by a user, the processor temporarily stores data in the data write requests in the memory. When a total amount of data in the memory reaches a specific threshold, the processor sends, to the storage device for persistent storage, the data stored in the memory. In addition, the processor is further configured to perform computation or processing on data, for example, metadata management, deduplication, data compression, virtualized storage space, and address translation. In an example, any compute device may access any storage device in the storage device cluster through a network. The storage device cluster includes a plurality of storage devices. One storage device includes one or more controllers, a network interface card, and a plurality of hard disks. The network interface card is configured to communicate with the compute device.

It should be noted that the foregoing example is merely a possible implementation of the data access system provided in this embodiment, and should not be understood as a limitation on this application. It may be understood that in the storage device 120 shown in FIG. 1, data may be stored in each hard disk in a form of a file. Files stored in hard disks form a file storage system, which may be, for example, a distributed file system, for example, a network file system (Network File System, NFS). The NFS is a distributed file system as well as a network protocol, and is used to access and share files between devices on a same local area network. For example, a NAS system may be implemented with support of an NFS protocol. The network file system is a low-cost network file sharing option that enables users and applications to access, store, and update files on a remote computer, just like using direct-attached storage. The network file system uses a remote procedure call protocol to route requests between a client and a server. Although participating devices need to support the network file system, the devices do not need to know detailed information of the network. It should be noted that remote procedure calls may not be secure. Therefore, the network file system should be deployed on only a trusted network behind a firewall. Although Windows supports the protocol, the protocol is mainly used in a Linux environment.

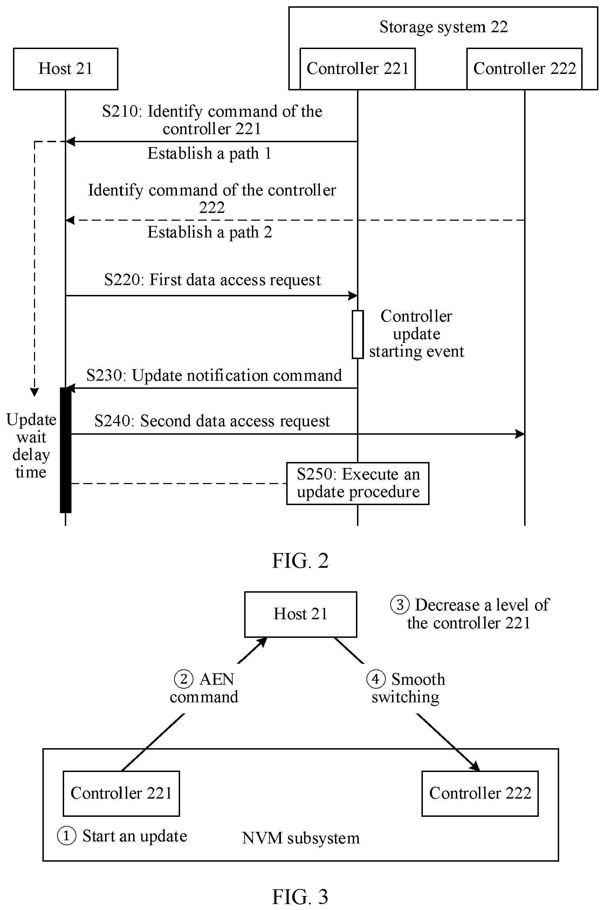

Based on FIG. 1, the following describes an example of a data access switching method provided in this application. FIG. 2 is a schematic flowchart 1 of a data access switching method according to this application. A host 21 may be configured to implement a function of the data access device 100 in FIG. 1. A storage system 22 may be configured to implement a function of the storage device 120 in FIG. 1. The storage system 22 includes a plurality of controllers. For example, a controller 221 may be configured to implement a function of the controller 0 in FIG. 1, and a controller 222 may be configured to implement a function of the controller 1 in FIG. 1. For hardware implementation of the host 21 and the storage system 22, refer to related descriptions in FIG. 1. Details are not described herein again.

In this embodiment, the controller 221 may also be referred to as a first controller, a first storage controller, or a current controller or a current storage controller for executing an update procedure, and the controller 222 may also be referred to as a second controller, a second storage controller, a standby controller for the host 21 to access the storage system 22, another controller, or the like.

Refer to FIG. 2. The data access switching method provided in this application includes the following steps S210 to S250.

S210: The controller 221 sends an identify command to the host, and establishes a path 1 with the host.

Corresponding to the process of S210, the host receives the identify command of the controller 221 in the storage system and an identify command of the controller 222 in the storage system, and establishes the path 1 with the controller 221.

In some optional implementations, the identify command (identify command) is also referred to as an identify packet, an authentication command, an authentication packet, a first command, a first packet, a first request, or another name.

In this embodiment, the identify command of the controller 221 includes update wait delay time of the controller 221, and the update wait delay time indicates update wait time of the controller, for example, a time difference between start time and end time of the update procedure executed by the controller. In some feasible examples, the update wait delay time is also referred to as control update wait delay time (controller update wait delay time/ctrl update wait delay time), controller update wait delay time, a control update wait delay, a control update wait latency, or another name. This is not limited in this application.

Optionally, a tail of the identify command includes a first reserved field, and the first reserved field is used to carry the control update wait delay time. In some optional implementations, the first reserved field may also be referred to as a ctrl update wait delay time field.

Table 1 provides a possible example for content represented by each byte in the identify command.

**Table 1 Identify command: Identifies a data structure of a controller and is an independently arranged I/O command**

| Byte (bytes) | Description (description) |
|---|---|
| 559:544 | Maximum domain namespace attachments (max domain namespace attachments, MAXDNA): The maximum domain namespace attachments is a maximum value of a sum of a number of namespaces attached to each I/O controller in a domain. If this field is cleared to 0h, no maximum value is specified. A value of this field shall be the same value for all I/O controllers in the domain. |
| 563:560 | Maximum I/O controller namespace attachments (maximum I/O controller namespace attachments, MAXCNA): The maximum I/O controller namespace attachments is a maximum number of namespaces that are allowed to be attached to this controller. If this field is cleared to 0h, no maximum value is specified. A value of this field shall be less than or equal to a number of namespaces supported by a non-volatile memory subsystem (non-volatile memory subsystem, NVM subsystem). |
| 767:564 | Reserved (Reserved, RSVD) |
| 1023:768 | NVM subsystem NVMe qualified name (NVM subsystem NVMe qualified name, SUBNQN): This field specifies an NVM subsystem NVMe qualified name as a UTF-8 null-terminated string. |
| 1791:1024 | Reserved |
| 1795:1792 | I/O queue command capsule supported size (I/O queue command capsule supported size, Ioccsz): This field defines an I/O command capsule size in 16 byte units. A minimum value that shall be indicated is 4 corresponding to 64 bytes. |
| 1799:1796 | I/O queue response capsule supported size (I/O queue response capsule supported size, Iorcsz): This field defines a maximum I/O response capsule size in 16 byte units. A minimum value that shall be indicated is 1 corresponding to 16 bytes. |
| 1801:1800 | In capsule data offset (in capsule data offset, ICDOFF): This field defines an offset where data starts within a capsule. This value is applicable to I/O queues only (an administration queue shall use the value of 0h). The value is specified in 16 byte units. The offset is from the end of a submission queue entry within a command capsule (starting at 64 bytes in the command capsule). A minimum value is 0 and a maximum value is FFFFh. |
| 1802 | Fabric controller attributes (fabric controller attributes, FCATT): This field indicates attributes of a controller that are specific to NVMe over fabrics. |
| | Bits 7:1 are reserved. |
| | If a bit 0 is cleared to "0", the NVM subsystem uses a dynamic controller model. |
| | If a bit 0 is cleared to "1", the NVM subsystem uses a static controller model. |
| 1803 | Maximum SGL data block descriptors (maximum SGL data block descriptors, MSDBD): This field indicates a maximum number of SGL data blocks or keyed SGL data block descriptors that a host is allowed to place in a capsule. 0h indicates no limit. |
| 1805:1804 | Optional fabric commands support (optional fabric commands support, OFCS): This field indicates whether a controller supports optional fabric commands. |
| | Bits 15:1 are reserved. |
| | If a bit 0 is set to "0", the controller does not support a disconnect command. |
| | If a bit 0 is set to "1", the controller supports a disconnect command and deletion of nda/Qes. |
| 2047:1806 | Reserved |

Table 1 shows only a data structure starting from the byte 544. The foregoing first reserved field may be the bytes 1806-1807 in the identify command, that is, positions of first two bytes in the bytes 2047:1806. In this example, computation for the identify command starts from the byte 0. If computation for the identify command starts from the byte 1, the first reserved field refers to the byte 1807 and the byte 1808 in the identify command.

For example, the bytes 1806-1807 (that is, the reserved fields Reserved in the last row in Table 1) in the identify command may be used to carry the foregoing control update wait delay time (ctrl update wait delay time).

In this embodiment, the reserved field (reserved field) in the identify command is used to carry the control update wait delay time (ctrl update wait delay time) provided in this application, so that alignment of the control update wait delay time can be implemented between the host and the controller. In this way, that service switching on the host does not drop to zero in a subsequent controller update scenario is effectively supported.

For the path 1 established between the host and the controller 221, the path 1 may be a first access path or a first path used by the host to perform data access on a hard disk in the storage system 22, and the path 1 includes the controller 221 and the hard disk to be accessed by the controller 221. In some optional implementations, the path 1 may also be referred to as an association 1 (association_1) between the host 21 and the controller 221.

In addition, the host 21 may further establish a path 2 with the controller 222. The path 2 may be a second access path or a second path used by the host to perform data access on a hard disk in the storage system 22, and the path 2 includes the controller 222 and the hard disk to be accessed by the controller 222. In some optional implementations, the path 2 may also be referred to as an association 2 (association_2) between the host 21 and the controller 222. In a process of establishing the path 2, the controller 222 sends an identify command to the host 21. The identify command carries the (control) update wait delay time of the controller 222. For specific implementation, refer to the process of establishing the path 1. Details are not described herein again.

S220: The host 21 sends a first data access request to the controller 221 through the path 1.

Correspondingly, the controller 221 receives the first data access request of the host through the path 1, and executes access indicated by the first data access request.

The first data access request is a data access request sent by the host to execute a data access service.

For example, if the first data access request is a write request, the first data access request carries data to be written into the hard disk in the storage system 22, and the access indicated by the first data access request and executed by the controller 221 is: writing the data carried in the first data access request into the hard disk.

For another example, if the first data access request is a read request, the first data access request carries a storage address of to-be-read data in the hard disk in the storage system 22, and the access indicated by the first data access request and executed by the controller 221 is: reading, based on the storage address carried in the first data access request, the data stored at the storage address in the hard disk, and feeding back the read data to the host 21.

In some feasible examples, the data access request provided in this application may also be referred to as a data request, a service request, a service packet, an access request, or another name. This is not limited in this application.

S230: The controller 221 sends an update notification command to the host.

Correspondingly, the host 21 receives the update notification command sent by the controller 221.

In some optional implementations, the update notification command is also referred to as an update notification packet, an asynchronous event information notification command (asynchronous event information notification command), an asynchronous event information notification packet, an asynchronous event (asynchronous event, AEN) packet, an AEN command, a second command, a second packet, a second request, or another name.

In this embodiment, the update notification command of the controller 221 carries an identifier that indicates the host 21 to send a second data access request to the controller 22. In some cases, the identifier is a control update starting (controller update starting/ctrl update starting) identifier. Assuming that the update notification command is an asynchronous event information notification command, the asynchronous event information notification command carries a control update starting identifier, the control update starting identifier indicates the host 21 to send the second data access request to the controller 222, and the second data access request and the first data access request belong to a same service flow.

In some feasible cases, the control update starting identifier also indicates that the controller 221 starts an update event, where for example, the controller 221 starts to execute an update procedure or is to execute an update procedure. In some feasible examples, the control update starting identifier may also be referred to as a controller update starting identifier, a control (controller) update start identifier, a control (controller) update startup identifier, or another name. This is not limited in this application.

The service flow provided in this embodiment may include but is not limited to: a multimedia stream like an audio stream or a video stream, an I/O stream to be accessed by the host, and the like. For example, the service flow is an I/O stream. That the second data access request and the first data access request belong to a same service flow means: The host 21 needs to send a plurality of data access requests to implement the data access service, and the plurality of data access requests belong to the same data access service. For example, to-be-accessed storage areas for the plurality of data access requests belong to a same hard disk, a same disk, or a same storage space indicated by one logical unit number (logical unit number, LUN). For example, the data access service corresponds to one I/O stream, and both the first data access request and the second data access request are I/O requests in the I/O stream. For feasible implementations of types of the second data access request, refer to the descriptions of the first data access request. Details are not described herein again.

Optionally, the asynchronous event information notification command includes a second reserved field, and the second reserved field is used to carry the foregoing control update starting identifier. For example, a value of the second reserved field is F1h, and F1h indicates that the controller 221 starts an update event, where for example, the controller 221 starts to execute an update procedure. In this way, the asynchronous event information notification command may also be referred to as the update notification command of the controller 221.

For meanings of different values in the asynchronous event information notification command, Table 2 provides a possible example.

**Table 2 Asynchronous event information notification command**

| Value (value) | Description (description) |
|---|---|
| 04h | Predictable latency event aggregate log change (predictable latency event aggregate log change): The predictable latency event aggregate log change indicates that event pending entries for one or more NVM sets has been added to a predictable latency event aggregate log. |
| 05h¹ | LBA status information alert (LBA status information alert): The LBA status information alert is a specific definition of an I/O command set. |
| 06h | Endurance group event aggregate log page change (endurance group event aggregate log page change): The endurance group event aggregate log page change indicates that an event entry for one or more endurance groups has been added to an endurance group event aggregate log. To clear this event, a host issues a Get Log Page command with the retain asynchronous event bit cleared to '0' for the endurance |
| | group event aggregate log. |
| 07h to EEh | Reserved |
| EFh² | Zone descriptor changed (Zone Descriptor Changed) |
| F0h | Discovery log page change (Discovery Log Page Change): A change has occurred on one or more of discovery log pages. The host should submit a Get Log Page command to receive updated discovery log pages. |
| F1h to FFh | Reserved |

The foregoing F1h is merely an optional manner of the value of the second reserved field provided in embodiments. In some optional implementations, another value may alternatively be used to indicate that the controller 221 starts the update event, for example, another value from F2h to FFh. This is not limited in this application.

S240: The host 21 sends the second data access request to the controller 222 through the path 2 in response to the update notification command.

Correspondingly, the controller 222 receives the second data access request of the host 21 through the path 2.

For specific implementation of the second data access request, refer to the descriptions of the first data access request. Details are not described herein again.

In a controller update scenario in the storage system, the controller actively sends the update notification command (asynchronous event information notification command) to the host. Because the update notification command instructs the host to send the data access request to another controller, even if the controller with which the host currently communicates is in the update scenario, the host may send the data access request to the another controller in the storage system in response to the update notification command, that is, the data access service of the host may be quickly switched from the current controller to the another controller for processing. This greatly alleviates a problem in a conventional technology that a host waits for a controller for a relatively long period of time before switching to another path, and reduces interruption time of the service on the host.

S250: The controller 221 executes the update procedure within the update wait delay time.

Because the current controller executes the update procedure within the update wait delay time, even if time for the host to execute the data access service through the another controller reaches the update wait delay time, a process of re-establishing the path between the host and the current controller is not affected by the update procedure of the controller, thereby further reducing the interruption time of the service on the host.

In addition, when end time of re-establishing the path between the host and the current controller does not reach the foregoing update wait delay time, the data access service of the host is not interrupted in a time period in which the data access service of the host is switched from the another controller back to an updated controller. This helps implement smooth switching of the data access service of the host in the controller update scenario in the storage system, thereby achieving effect that the data access service of the host does not drop to zero.

For the example in FIG. 2, this embodiment further provides a possible specific example. FIG. 3 is a schematic flowchart 2 of a data access switching method according to this application. FIG. 3 is described by using an example in which the storage system 22 in FIG. 2 is a non-volatile memory subsystem (NVM subsystem). For hardware implementation of the host 21, the controller 221, and the controller 222, refer to the descriptions in the foregoing embodiments. Details are not described herein again.

Refer to FIG. 3. The switching method provided in this embodiment includes the following steps ① to ④.
① The controller 221 starts an update.

A manner of starting the update may be notifying the host 21 through a command, for example, ② as described in the following.

② The controller 221 sends an abnormal event information notification command (AEN command) to the host 21.

In this example, the controller 221 notifies, through an AEN notice event (the event is indicated by the AEN command), the host 21 that the controller 221 starts the update. For specific implementation of the AEN command, refer to the foregoing descriptions of S230 above. Details are not described herein again.

③ The host 21 decreases a level of the controller 221 in response to the AEN command.

For example, the host 21 degrades the path 1 provided by the controller 221 or sets the path 1 to an invalid state, and starts a newly established path (or association) to the controller 221 after the control update wait delay time.

④ The host 21 performs smooth switching of the data access service in the NVM subsystem through the path 2 provided by the controller 222.

In this way, the data access service to be executed by the host 21 may be smoothly switched from the controller 221 to another controller, so that the NVM subsystem continuously executes the data access service, thereby achieving effect that the data access service of the host does not drop to zero.

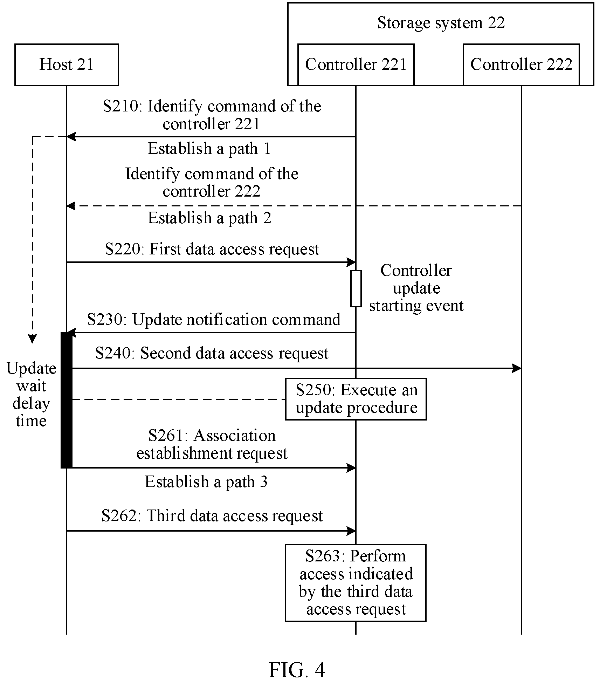

In an optional implementation, based on FIG. 2 and FIG. 3, an embodiment of this application further provides a feasible example, to enable an access path between the host 21 and the storage system 22 to restore communication of the controller before the update, so as to properly use controller resources in the storage system 22. FIG. 4 is a schematic flowchart 3 of a data access switching method according to this application. For hardware implementation of the host 21, the controller 221, and the controller 222, refer to the descriptions in the foregoing embodiments. Details are not described herein again.

Refer to FIG. 4. After an update of the controller 221 is completed, the switching method provided in this embodiment includes the following steps S261 to S263.

S261: After expiration of the update wait delay time of the controller 221, the host 21 sends an association establishment request to the controller 221, and establishes a path 3 to the controller 221.

The association establishment request indicates that the host 21 is to reconnect the access path with the controller 221, so that the data access service to be executed by the host 21 is switched from another controller back to the controller 221. In some feasible cases, the association establishment request is also referred to as an association request, an association establishing request, a path establishment request, a path request, a path establishing request, a third request, or another name. This is not limited in this application.

Corresponding to the process of S261, the controller 221 receives the association establishment request of the host, and establishes the path 3 to the host 21 based on the association establishment request.

In this example, the path 3 may be a third access path or a third path used by the host to perform data access on a hard disk in the storage system 22, and the path 3 includes the controller 221 and the hard disk to be accessed by the controller 221. In some optional implementations, the path 3 may also be referred to as an association 3 (association_3) between the host 21 and the controller 221. In a process of establishing the path 3, the controller 221 sends an identify command to the host 21. The identify command carries the (control) update wait delay time of the controller 221. For specific implementation, refer to the process of establishing the path 1. Details are not described herein again.

S262: The host 21 sends a third data access request to the controller 221 through the path 3.

The third data access request and the second data access request belong to the same service flow. For example, to implement the data access service, the host 21 needs to send a plurality of data access requests, and the plurality of data access requests belong to the same data access service. For example, the data access service corresponds to one I/O stream, and both the third data access request and the second data access request are I/O requests in the I/O stream.

S263: The controller 222 of the host 21 receives the third data access request of the host through the path 2, and executes access indicated by the third data access request.

For feasible implementations of types of the third data access request, refer to the descriptions of the first data access request. Details are not described herein again.

After an update of the current controller is completed, the controller re-establishes a path with the host. Because the data access service of the host within the update wait delay time of the current controller has been executed by the another controller, the interruption time of the service on the host is reduced, thereby avoiding a problem that waiting time of the host is long in the controller update scenario.

It should be noted that, S261 to S263 provided in this embodiment are executed after the update of the controller 221 is completed, but may alternatively be executed after the host 21 waits for the control update wait delay time (ctrl update wait delay time). A difference between the two lies in that: The former may be triggered by the controller 221 actively sending an update completion response packet to the host 21, and the latter is triggered after a timer in the host 21 waits for the ctrl update wait delay time. Both can reduce the interruption time of the service on the host, and avoid a problem that the waiting time of the host is long in the controller update scenario.

In conclusion, in a negotiation phase between the storage system and the host, the storage system may indicate to the host that the storage system supports a smooth switchover function during a service update and may further indicate a maximum control update time (update wait delay time) supported by the storage system. In the controller update scenario, before the controller is updated, the controller proactively sends an asynchronous event (for example, the foregoing AEN command) to the host, to notify the host to perform path switching and then reset the current controller for an update. Since services on the host do not need to wait for expiration of a preset timeout period, for example, an I/O timeout or a KATO, it is ensured that the services on the host are unaware of the controller update process in the storage system. Finally, after expiration of an update time window (control update wait delay time) of the current controller, the host reinitiates link establishment and path recovery for the original path. Using the handshake mechanism between the storage system and the host ensures that controllers in the storage system are updated in a rolling manner and the services on the host never drops to zero.

For example, when the storage system is an NVM subsystem including a plurality of controllers (or a plurality of controller nodes/control nodes), the host separately establishes a plurality of paths in an association form with the plurality of controllers. The plurality of paths may be used by the host to execute a data access service on the NVM subsystem, so that the host implements multipath management and smooth switching for the service in the controller scenario through an NVMe protocol stack in the NVM subsystem.

In the accompanying drawings corresponding to the foregoing embodiments, only one data access device and one host are shown. However, in some optional implementations, the storage system may provide access for a plurality of different data access devices or hosts, and the data access switching method provided in this application can still be implemented. Details are not described herein again.

It may be understood that, to implement functions in the foregoing embodiments, the host and the storage system include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

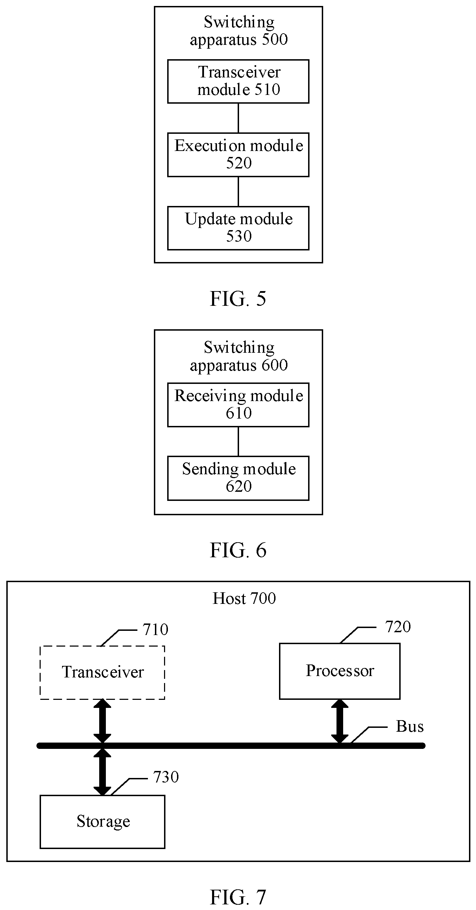

The foregoing describes in detail the data access switching method provided in embodiments with reference to the accompanying drawings. The following describes a data access switching apparatus provided in embodiments with reference to FIG. 5 and FIG. 6.

FIG. 5 is a diagram 1 of a structure of a data access switching apparatus according to this application. The switching apparatus 500 may be configured to implement functions of the controller in the foregoing method embodiments, and therefore can also implement beneficial effect of the foregoing method embodiments. In this embodiment, the switching apparatus 500 may be the controller 0 or the controller 1 shown in FIG. 1, or may be the controller 221 or the controller 222 provided in the subsequent embodiments. It should be understood that the switching apparatus 500 may alternatively be a module (for example, a chip) used in any one of the foregoing controllers.

For example, the switching apparatus 500 includes a transceiver module 510, an execution module 520, and an update module 530. The transceiver module 510 is configured to: send an identify command to a host, and establish a first path with the host. The identify command includes update wait delay time. The execution module 520 is configured to: receive a first data access request of the host through the first path, and execute access indicated by the first data access request. The transceiver module 510 is further configured to send an update notification command (asynchronous event information notification command) to the host, where the update notification command carries an identifier that indicates the host to send a second data access request to a second storage controller in the storage system, and the second data access request and the first data access request belong to a same service flow. The update module 530 is configured to execute an update procedure within the update wait delay time.

The transceiver module 510, the execution module 520, the update module 530, and another module that may exist may collaboratively implement the steps of the controller in the foregoing method embodiments. For more detailed descriptions about the transceiver module 510, the execution module 520, and the update module 530, directly refer to related descriptions of the controller in the foregoing method embodiments shown in the foregoing accompanying drawings. Details are not described herein.

FIG. 6 is a diagram 2 of a structure of a data access switching apparatus according to this application. The switching apparatus 600 may be configured to implement functions of the host in the foregoing method embodiments, and therefore can also implement beneficial effect of the foregoing method embodiments. In this embodiment, the switching apparatus 600 may be the data access device 100 shown in FIG. 1, or may be the host provided in the subsequent embodiments. It should be understood that the switching apparatus 600 may alternatively be a module (for example, a chip) used in any one of the foregoing hosts.

For example, the switching apparatus 600 includes a receiving module 610 and a sending module 620. The receiving module 610 is configured to: receive an identify command of a first storage controller in a storage system and an identify command of a second storage controller in the storage system, establish a first path with the first storage controller, and establish a second path with the second storage controller, where the identify command of the first storage controller includes update wait delay time of the first storage controller. The sending module 620 is configured to send a first data access request to the first storage controller through the first path. The receiving module 610 is further configured to receive an update notification command (asynchronous event information notification command) sent by the first storage controller, where the update notification command carries an identifier that indicates the host to send a second data access request to the second storage controller, and the second data access request and the first data access request belong to a same service flow. The sending module 620 is further configured to send the second data access request to the second storage controller through the second path in response to the update notification command.

The receiving module 610, the sending module 620, and another module that may exist may collaboratively implement the steps of the host in the foregoing method embodiments. For more detailed descriptions about the receiving module 610 and the sending module 620, directly refer to related descriptions of the host in the foregoing method embodiments shown in the foregoing accompanying drawings. Details are not described herein.

The switching apparatus implements, through software, the switching method shown in any one of the foregoing accompanying drawings, and the switching apparatus and each unit thereof may also be software modules. A processor invokes the software module to implement the foregoing switching method. The processor may be a central processing unit (central processing unit, CPU), an application-specific integrated circuit (application-specific integrated circuit, ASIC) implementation, or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof.

It may be understood that the apparatuses shown in FIG. 5 and FIG. 6 are merely examples provided in embodiments. Based on different switching processes, the switching apparatus may include more or fewer units. This is not limited in this application.

When the switching apparatus is implemented through hardware, the hardware may be implemented through a processor, a chip, or a chip system. The chip system includes one or more chips, and each chip includes an interface circuit and a control circuit. The interface circuit is configured to receive data from another device other than the chip and perform transmission of the data to the control circuit, or send data from the control circuit to another device other than the chip. The control circuit and the interface circuit are configured to implement, through a logic circuit or by executing code instructions, the method according to any one of the possible implementations of the foregoing embodiments. For beneficial effect, refer to descriptions of any aspect of foregoing embodiments. Details are not described herein again.

It may be understood that the processor in embodiments of this application may be a CPU, or may be another general-purpose processor, a digital signal processor (digital signal processor, DSP), an ASIC, an FPGA or another programmable logic device, a transistor logic device, a hardware component, or any combination thereof. The general-purpose processor may be a microprocessor or any regular processor.

In addition, the apparatuses shown in FIG. 5 and FIG. 6 may also be implemented through an electronic device, and the switching apparatus 500 in FIG. 5 may be implemented through a controller. For example, the controller includes a control circuit and an interface circuit. The interface circuit is configured to: send an identify command, and perform the data access switching method in any one of the foregoing embodiments in collaboration with the control circuit. For specific implementation of the controller, refer to the foregoing descriptions in FIG. 1. Details are not described herein again.

The switching apparatus in FIG. 6 may be implemented through the host. FIG. 7 is a diagram of a structure of a host according to this application. The host may be configured to implement functions of the host in the foregoing method embodiments, and therefore can also implement beneficial effects of the foregoing method embodiments. In this embodiment, the host may be the data access device 100 shown in FIG. 1, or may be the host 21 in the subsequent embodiments, or may be a module (for example, a chip) used in the data access device.

As shown in FIG. 7, the host 700 may include a processor 720. Optionally, the host 700 may further include a storage 730 and/or a transceiver 710. The processor 720 is coupled to the storage 730 and the transceiver 710, for example, may be connected through a communication bus. The communication bus may include but is not limited to a PCIe bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like.

The following describes the components of the host 700 in detail with reference to FIG. 7.

The processor 720 is a control center of the host 700, and may be a processor, or may be a collective term for a plurality of processing elements. For example, the processor 720 is one or more CPUs, or may be an ASIC, or may be one or more integrated circuits configured to implement embodiments of this application, for example, one or more digital signal processors (DSP), or one or more field programmable gate arrays (FPGA).

Optionally, the processor 720 may perform various functions of the host 700 by running or executing a software program stored in the storage 730 and by invoking data stored in the storage 730. In a specific implementation, in an embodiment, the processor 720 may include one or more CPUs.

Optionally, the host 700 may also include a plurality of processors. Each of the processors may be a single-core processor (single-CPU), or may be a multi-core processor (multi-CPU). The processor herein may be one or more devices, circuits, and/or processing cores configured to process data (for example, computer program instructions).

The storage 730 is configured to store a software program for performing the solutions of this application, and the processor 720 controls execution. For a specific implementation, refer to the foregoing method embodiments. Details are not described herein again. For example, the storage 730 may be a ROM or another type of static storage device that can store static information and instructions, a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that is accessible by a computer, but is not limited thereto. The storage 730 may be integrated with the processor 720, or may exist independently, and is coupled to the processor 720 through an interface circuit (not shown in FIG. 7) of the host 700. This is not specifically limited in embodiments of this application.

The transceiver 710 is configured to communicate with another device. For example, the host 700 is a user end (for example, a client) or an application server, and the transceiver 710 may be configured to communicate with a storage device, or communicate with another host. For another example, the host 700 is a smart network interface card (SNIC), and the transceiver 710 may be configured to communicate with a storage device, or communicate with another smart network interface card. For another example, the host 700 is a multi-core chip, and the transceiver 710 may be configured to communicate with another multi-core chip.

Optionally, the transceiver 710 may include a receiver and a transmitter (not separately shown in FIG. 7). The receiver is configured to implement a receiving function, and the transmitter is configured to implement a sending function. Optionally, the transceiver 710 may be integrated with the processor 720, or may exist independently, and is coupled to the processor 720 through an interface circuit (not shown in FIG. 7) of the host 700. This is not specifically limited in embodiments of this application.

In this embodiment, the transceiver 710 is configured to receive an identify command, where the identify command includes control update wait delay time of the first storage controller. The processor 720 is configured to perform the data access switching method in any one of the foregoing embodiments in collaboration with the foregoing transceiver 710 based on the foregoing identify command.

The method steps in this embodiment may be implemented in a hardware manner, or may be implemented in a manner of executing software instructions by the processor. The software instructions include corresponding software modules. The software modules may be stored in a RAM, a flash memory, a ROM, a PROM, an EPROM, an EEPROM, a register, a hard disk, a removable hard disk, a CD-ROM, or a storage medium of any other form known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a compute device. Certainly, the processor and the storage medium may alternatively exist as discrete components in the network device or the terminal device.

This application provides a storage system. For specific implementation of the storage system, refer to the foregoing descriptions in FIG. 1. Details are not described herein again.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A data access switching method, wherein the method comprises:
sending, by a first storage controller, an identify command to a host, and establishing a first path with the host, wherein the identify command comprises update wait delay time;
receiving, by the first storage controller, a first data access request of the host through the first path, and executing access indicated by the first data access request;
sending, by the first storage controller, an update notification command to the host, wherein the update notification command carries an identifier that indicates the host to send a second data access request to a second storage controller, and the second data access request and the first data access request belong to a same service flow; and
executing, by the first storage controller, an update procedure within the update wait delay time.

2. The method according to claim 1, wherein after an update of the first storage controller is completed, the method further comprises:
receiving, by the first storage controller, an association establishment request of the host;
establishing, by the first storage controller, a second path with the host based on the association establishment request; and
receiving, by the first storage controller, a third data access request of the host through the second path, and executing access indicated by the third data access request, wherein the third data access request and the second data access request belong to the same service flow.

3. The method according to claim 1 or 2, wherein the update wait delay time is control update wait delay time, the update notification command is an asynchronous event information notification command, and the identifier is a control update starting identifier.

4. The method according to claim 3, wherein a tail of the identify command comprises a first reserved field, and the first reserved field is used to carry the control update wait delay time.

5. The method according to claim 4, wherein bytes 1806-1807 in the identify command are used to carry the control update wait delay time.

6. The method according to any one of claims 3 to 5, wherein the asynchronous event information notification command comprises a second reserved field, and the second reserved field is used to carry the control update starting identifier.

7. The method according to claim 6, wherein a value of the second reserved field is F1h.

8. A data access switching method, wherein the method comprises:
receiving, by a host, an identify command of a first storage controller in a storage system and an identify command of a second storage controller in the storage system, establishing a first path with the first storage controller, and establishing a second path with the second storage controller, wherein the identify command of the first storage controller comprises update wait delay time of the first storage controller;
sending, by the host, a first data access request to the first storage controller through the first path;
receiving, by the host, an update notification command sent by the first storage controller, wherein the update notification command carries an identifier that indicates the host to send a second data access request to the second storage controller, and the second data access request and the first data access request belong to a same service flow; and
sending, by the host, the second data access request to the second storage controller through the second path in response to the update notification command.

9. The method according to claim 8, wherein after sending the second data access request to the second storage controller through the second path, the method further comprises:
after expiration of the update wait delay time of the first storage controller, sending an association establishment request to the first storage controller, and establishing a third path with the first storage controller; and
sending a third data access request to the first storage controller through the third path, wherein the third data access request and the second data access request belong to the same service flow.

10. The method according to claim 8 or 9, wherein the update wait delay time is control update wait delay time, the update notification command is an asynchronous event information notification command, and the identifier is a control update starting identifier.

11. The method according to claim 10, wherein a tail of the identify command comprises a first reserved field, and the first reserved field is used to carry the control update wait delay time.

12. The method according to claim 11, wherein bytes 1806-1807 in the identify command are used to carry the control update wait delay time.

13. The method according to any one of claims 10 to 12, wherein the asynchronous event information notification command comprises a second reserved field, and the second reserved field is used to carry the control update starting identifier.

14. The method according to claim 13, wherein a value of the second reserved field is F1h.

15. A data access switching apparatus, used in a first storage controller, wherein the apparatus comprises:
a transceiver module, configured to: send an identify command to a host, and establish a first path with the host, wherein the identify command comprises update wait delay time; and
an execution module, configured to: receive a first data access request of the host through the first path, and execute access indicated by the first data access request, wherein
the transceiver module is further configured to send an update notification command to the host, wherein the update notification command carries an identifier that indicates the host to send a second data access request to a second storage controller in the storage system, and the second data access request and the first data access request belong to a same service flow; and
an update module, configured to execute an update procedure within the update wait delay time.

16. A data access switching apparatus, wherein the apparatus is used in a host, and the apparatus comprises:
a receiving module, configured to: receive an identify command of a first storage controller in a storage system and an identify command of a second storage controller in the storage system, establish a first path with the first storage controller, and establish a second path with the second storage controller, wherein the identify command of the first storage controller comprises update wait delay time of the first storage controller; and
a sending module, configured to send a first data access request to the first storage controller through the first path, wherein
the receiving module is further configured to receive an update notification command sent by the first storage controller, wherein the update notification command carries an identifier that indicates the host to send a second data access request to the second storage controller, and the second data access request and the first data access request belong to a same service flow; and
the sending module is further configured to send the second data access request to the second storage controller through the second path in response to the update notification command.

17. A controller, comprising a control circuit and an interface circuit, wherein
the interface circuit is configured to: send an identify command, and perform the method according to any one of claims 1 to 7 in collaboration with the control circuit.

18. A storage system, comprising a hard disk and a plurality of controllers according to claim 17, wherein
the hard disk is configured to store data; and
the controller is configured to: receive a data access request for the data, and perform the method according to any one of claims 1 to 7 in collaboration with the hard disk.

19. A host, comprising a processor and a transceiver, wherein
the transceiver is configured to receive an identify command, and perform the method according to any one of claims 8 to 14 in collaboration with the processor.

20. A readable storage medium, wherein the readable storage medium comprises a computer program or instructions; and when the computer program or the instructions are executed by an electronic device, the electronic device performs the method according to any one of claims 1 to 7 or performs the method according to any one of claims 8 to 14.

21. A computer program product, wherein the computer program product comprises a computer program or instructions; and when the computer program or the instructions are executed by an electronic device, the electronic device performs the method according to any one of claims 1 to 7 or performs the method according to any one of claims 8 to 14.
